# EUROPÄISCHE PATENTANMELDUNG

(11) **EP 1 772 334 A2**
(43) Veröffentlichungstag der Anmeldung: **11.04.2007**
(21) Anmeldenummer: 06121162.9
(22) Anmeldetag: 25.09.2006
(51) Int. Cl.: B60T 8/36, F15B 13/00

(54) **Verfahren zum Herstellen eines Hydroaggregats und Hydroaggregat**

(30) Priorität: 06.10.2005 DE 102005047918
(71) Anmelder: ROBERT BOSCH GMBH, 70442 Stuttgart (DE)
(72) Erfinder: Acar, Sezgin, 71638, Ludwigsburg (DE); Vetter, Reinhard, 87448, Waltenhofen (DE); Gradtke, Oliver, 72766, Reutlingen (DE); Lehenberger, Stefan, 87480, Weitnau (DE); Weh, Andreas, 87477, Sulzberg (DE); Schoen-Hermenau, Ruediger, 71640, Ludwigsburg (DE); Seeger, Andreas, 73565, Spraitbach (DE)

(57) **Zusammenfassung**

Die Erfindung betrifft ein Verfahren zum Herstellen eines Hydroaggregats (10) einer hydraulischen Fahrzeugbremsanlage mit den folgenden Schritten: Bereitstellen eines Steuergeräts (12) und eines Hydraulikgeräts (14), Vorbereiten einer Verrastung (34,36;42,44) zwischen dem Steuergerät (12) und dem Hydraulikgerät (14), Vorbereiten einer Verklebung (40) zwischen dem Steuergerät (12) und dem Hydraulikgerät (14), Zusammenfügen von Steuergerät (12) und Hydraulikgerät (14) sowie Halten des Steuergeräts (12) am Hydraulikgerät (14) mittels der Verrastung (34,36;42,44) zumindest während eines Aushärtens der Verklebung (40) zwischen dem Steuergerät (12) und dem Hydraulikgerät (14).
Eine zweite Erfindung betrifft ein Hydroaggregat (10) einer hydraulischen Fahrzeugbremsanlage mit einem Steuergerät (12), wobei das Steuergerät (12) an dem Hydraulikgerät (14) mittels einer Verklebung (40) und einer Verrastung (34,36;42,44) ortsfest gehalten ist.

## Beschreibung

Die Erfindung betrifft ein Verfahren zum Herstellen eines Hydroaggregats einer hydraulischen Fahrzeugbremsanlage sowie ein mit einem derartigen Herstellungsverfahren geschaffenes Hydroaggregat.

Bei modernen hydraulischen Fahrzeugbremsanlagen werden Hydroaggregate zum Steuern des an Radbremsen der Fahrzeugbremsanlage anzulegenden Drucks verwendet. Der Druck wird dabei mit Hilfe des Hydroaggregats den Radbremsen in Abhängigkeit von einem über ein Bremspedal übermittelten Fahrerwunsch und weiteren insbesondere am zugehörigen Fahrzeug gemessenen Parametern bestimmt. Das Hydroaggregat weist dazu ein Hydraulikgerät auf, welches eine von einem Elektromotor angetriebene Pumpe in einem Pumpengehäuse und in dem Pumpengehäuse gehaltene Magnetventile umfasst. Ferner ist an diesem Hydraulikgerät ein Steuergerät vorgesehen, mit dem sowohl der Elektromotor als auch die Magnetventile angesteuert werden können. Das Steuergerät weist dazu in der Regel eine Schaltung mit elektronischen Bauelementen und Kontaktmittel zu dem Elektromotor sowie den Magnetventilen auf.

Da eine Fahrzeugbremsanlage grundsätzlich ein sicherheitskritisches Element eines Fahrzeugs darstellt, werden hinsichtlich des Betriebs derartiger Hydroaggregate sehr hohe Sicherheitsanforderungen gestellt. Darüber hinaus werden die Hydroaggregate größtenteils unter sehr widrigen Umgebungsbedingungen, beispielsweise im Motorraum eines zugehörigen Fahrzeugs, betrieben.

Es ist eine Aufgabe der Erfindung ein Verfahren zum Herstellen eines Hydroaggregats einer hydraulischen Fahrzeugbremsanlage sowie ein entsprechend hergestelltes Hydroaggregat zu schaffen, mit dem eine sicherer Betrieb auch unter sehr widrigen Umgebungsbedingungen gewährleistet ist.

Diese Aufgabe ist erfindungsgemäß mit einem Verfahren zum Herstellen eines Hydroaggregats mit einer hydraulischen Fahrzeugbremsanlage gemäß Anspruch 1 und einem Hydroaggregat einer hydraulischen Fahrzeugbremsanlage gemäß Anspruch 4 gelöst. Vorteilhafte Weiterbildungen der Erfindung sind in den abhängigen Ansprüchen beschrieben.

Das erfindungsgemäße Verfahren umfasst die Schritte: Bereitstellen eines Steuergeräts und eines Hydraulikgeräts, Vorbereiten einer Verrastung zwischen dem Steuergerät und dem Hydraulikgerät, Vorbereiten einer Verklebung zwischen dem Steuergerät und dem Hydraulikgerät, Zusammenfügen von Steuergerät und Hydraulikgerät sowie Halten des Steuergeräts am Hydraulikgerät mittels der Verrastung zumindest während eines Aushärtens der Verklebung zwischen dem Steuergerät und dem Hydraulikgerät. Das erfindungsgemäße Hydraulikaggregat ist dadurch gekennzeichnet, dass sein Steuergerät an dem Hydraulikgerät sowohl mittels einer Verklebung als auch einer Verrastung ortsfest gehalten ist.

Im Gegensatz zu herkömmlichen Hydroaggregaten, bei denen in der Regel die Verbindung zwischen Steuergerät und Hydraulikgerät mittels einer Gummidichtung und einer Verschraubung geschaffen ist, ist erfindungsgemäß eine Verklebung dieser beiden wesentlichen Bauteile eines Hydroaggregats vorgesehen. Mit der Verklebung wird eine über die Betriebsdauer des Hydroaggregats auch unter widrigen und stark wechselhaften Umgebungsbedingungen dichte Verbindung zwischen Steuergerät und Hydraulikgerät hergestellt. Da die Verbindungsstelle zwischen diesen beiden Bauteilen des Hydroaggregats in der Regel vergleichsweise großflächig ist, schafft diese erfindungsgemäß hergestellte Dichtklebung erhöhte Sicherheit.

Ein Verkleben von Bauteilen ist in einem Herstellungs- bzw. Montageprozess jedoch vergleichsweise schwierig herzustellen. Zunächst ist der Umgang mit Klebematerial für derartige Verklebungen nicht ganz unproblematisch. Darüber hinaus hat eine Verklebung den Nachteil, dass der Kleber aushärten und während dieses Aushärteprozesses die Montage des Hydroaggregats nicht weitergeführt werden kann. Dieser Nachteil wird erfindungsgemäß dadurch überwunden, dass zwischen dem Steuergerät und dem Hydraulikgerät zusätzlich zu einer Verklebung eine Verrastung hergestellt wird, mittels der die beiden Bauteile zumindest während des Aushärtens der Verklebung zusammengehalten werden. Eine Verrastung kann mit dem bereits bestehenden Fertigungsprozessen der Bauteile für Steuergerät und Hydraulikgerät, nämlich in der Regel Spritzgießen und spanende Materialbearbeitung, sehr kostengünstig hergestellt werden und stellt daher nahezu keinen wirklichen Mehraufwand dar.

So kann erfindungsgemäß trotz Verwendung einer Dichtklebeverbindung zur Befestigung eines Steuergeräts an einem Hydraulikgerät der Monatageprozess weitergeführt werden, ohne den Aushärteprozess der Verklebung zu stören. Dieser Vorteil wirkt sich insbesondere bei Verklebungen aus, bei denen das Aushärten bei Raumtemperatur geschieht. Bei solchen Verklebungen ist die erforderliche Aushärtezeit nämlich vergleichsweise lang.

Die erfindungsgemäße Vorgehensweise wird ferner bevorzugt zum Befestigen eines Steuergeräterahmens an einem Pumpengehäuse eines Hydraulikgeräts verwendet. Derartige Steuergeräterrahmen werden bei heutigen Hydraulikaggregaten wie oben bereits erwähnt in der Regel mittels eines eingelegten oder eingespritzten Gummidichtrings gegen das zugehörige Pumpengehäuse verpresst. Dazu müssen in der Regel mehrere Niet- oder Schraubverbindungen hergestellt werden. Sobald nur eine dieser Niet- oder Schraubverbindungen fehlerhaft ist, entstehen zumindest Kosten für die Fehlerbeseitigung.

Um insbesondere eine derartige Verbindung zwischen einem Steuergeräterahmen und einem Pumpengehäuse herzustellen, wird erfindungsgemäß bevorzugt insbesondere vor einem Zusammenfügen von Steuergerät und Hydraulikgerät eine Klebeschnurr an zumindest dem Steuergerät oder dem Hydraulikgerät ausgebildet.

Die erfindungsgemäße Verrastung wird bevorzugt durch eine erstes Rastelement am Steuergerät und ein zweites Rastelement am Hydraulikgerät gebildet. Dieses zweite Rastelement ist vorteilhaft an einem zum Hydraulikgerät gehörenden Magnetventil ausgebildet. An den einzelnen Bauteilen eines solchen Magnetventils werden während der Herstellung verschiedenste Stanz-, Präge- und/oder Tiefziehprozesse durchgeführt. Mit derartigen Prozessen kann dann in der Regel kostenneutral auch das genannte zweite Rastelement ausgebildet werden.

Um eine besonders platzsparende und zugleich prozessischer herzustellende Verbindung der genannten Rastelemente zu erzeugen ist das zweite Rastelement bevorzugt an einem vom restlichen Hydraulikgerät abgewandten Endbereich des Magnetventils und bevorzugt in einem Magnetspulen- bzw. Magnetgruppengehäuse ausgebildet.

Alternativ oder zusätzlich ist das zweite Rastelement vorzugsweise an einer äußeren Mantelfläche eines zylindrischen Magnetgruppengehäuses des Magnetventils ausgebildet.

Nachfolgend werden Ausführungsbeispiele von Verfahren zum Herstellen erfindungsgemäßer Hydroaggregate an entsprechend hergestellten Hydroaggregaten anhand der beigefügten schematischen Zeichnungen näher erläutert. Es zeigt:
Fig. 1 einen teilweisen Längsschnitt eines ersten Ausführungsbeispiels eines erfmdungsgemäßen Hydroaggregats und
Fig. 2 einen teilweisen Längsschnitt eines zweiten Ausführungsbeispiels eines erfindungsgemäßen Hydroaggregats.

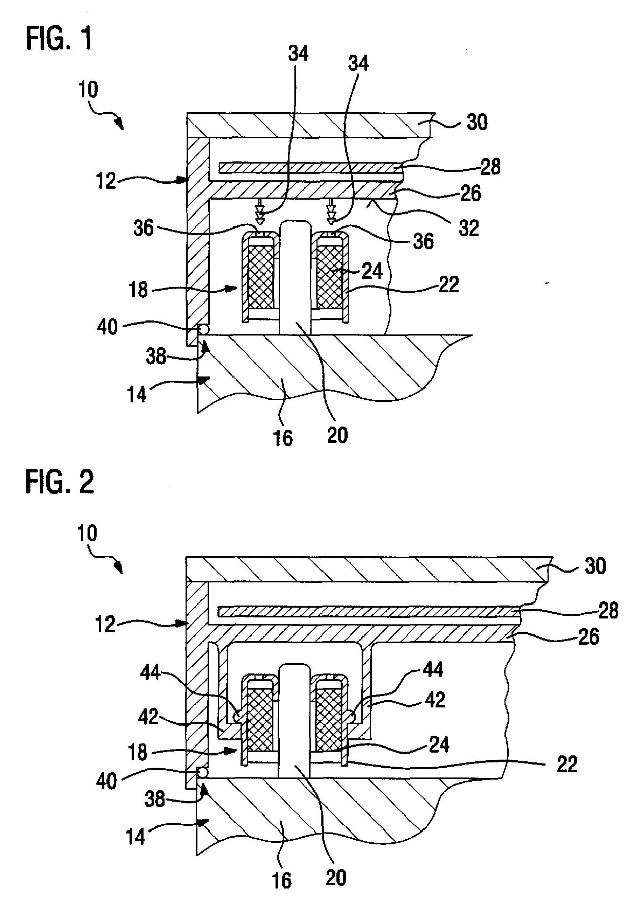

In Fig. 1 ist ein Ausführungsbeispiel eines Hydroaggregats 10 veranschaulicht, welches als wesentliche Bauteile ein Steuergerät 12 und ein Hydraulikgerät 14 umfasst. Das Hydraulikgerät 14 ist im Wesentlichen mittels eines im Wesentlichen quaderförmigen, hier nur abschnittsweise dargestellten Pumpengehäuses 16 gebildet, an dem an einer der Seitenflächen des Quaders zumindest ein Magnetventil 18 in eine nicht dargestellte Bohrung eingesteckt ist. Das Magnetventil 18 umfasst eine stabförmige Stößelführung 20, welche von einem hohlzylindrischen Magnetgruppengehäuse 22 umgeben ist. In dem Magnetgruppengehäuse 22 befindet sich eine Magnetspule 24 welche zum wahlweisen Bewegen eines in der Stößelführung 20 verschiebbar gelagerten, nicht dargestellten Stößels dient.

Das Steuergerät 12 ist mit einem im Wesentlichen ebenfalls quaderförmigen, spritzgegossenen und vergleichsweise dünnwandigen Elektronikgehäuse 26 gebildet, in dem eine Leiterplatte 28 aufgenommen und welches mittels eines Deckels 30 verschlossen ist.

An einer zum Pumpengehäuse 16 gewandeten Innenseite 32 des in diesem Bereich becherförmig über das Magnetgruppengehäuse 22 gestülpten Elektronikgehäuses 26 sind zwei zum Pumpengehäuse 16 hin von der Innenseite 32 abstehende Rastzapfen 34 während des Spritzvorgangs des Elektronikgehäuses 26 ausgebildet worden.

Gegenüber von diesen Rastzapfen 34 sind an dem vom Pumpengehäuse 16 abgewandten Endbereich des Magnetgruppengehäuses 22 und insbesondere an dessen Stirnseite zugehörige Rastöffnungen 36 ausgebildet. In dies damit zum Hydraulikgerät 14 gehörenden Rastöffnungen 36 dringen die zum Steuergerät 12 gehörenden Rastzapfen 34 beim Aufsetzen des Steuergerätes 12 auf das Hydraulikgerät 14 ein und es wird dadurch eine Verrastung dieser Bauteile geschaffen.

Ferner ist an dem zum Pumpengehäuse 16 gewandten Rand des Steuergerätes 12 eine um diesen Rand umlaufende Nut 38 während des Spritzvorgangs des Elektronikgehäuses 26 geschaffen worden. In diese Nut 38 wird während des nachfolgenden Montageprozesses noch vor dem oben genannten Zusammenfügen von Steuergerät 12 und Hydraulikgerät 14 eine Klebeschnurr 40 mittels einer nicht dargestellten Dosiereinrichtung für Klebermaterial eingebracht. Während des Zusammenfügens von Steuergerät 12 und Hydraulikgerät 14 wird diese Klebeschnurr 40 dann beim Aufsetzen des Randes des Elektronikgehäuses 26 auf den zugehörigen Rand des Pumpengehäuses 16 solange geringfügig verformt, bis die Verrastung der Rastzapfen 34 in den Rastöffnungen 36 vollständig hergestellt ist. Das damit am Hydraulikgerät 14 gehaltene Steuergerät 12 kann nachfolgend im Bereich der Klebeschnurr 40 durch einen Aushärtevorgang bei Raumtemperatur derart verklebt werden, dass eine auch unter widrigen Umgebungsbedingungen über die gesamte Betriebsdauer des Hydroaggregats 10 hinweg sicher bestehen bleibende Dichtung geschaffen ist. Mit der geschaffenen Verklebung ist ferner im Hinblick auf die auf das Hydraulikaggregat 10 während des Betriebs einwirkenden Erschütterungen und Stöße eine sichere mechanische Verbindung von Steuergerät 12 und Hydraulikgerät 14 geschaffen.

In Fig. 2 ist ein Ausführungsbeispiel eines Hydroaggregats 10 dargestellt, welches im Hinblick auf die wesentliche Gestalt von Steuergerät 12 und Hydraulikgerät 14 wie das in Fig. 1 dargestellte Ausführungsbeispiel gestaltet ist.

Das Ausführungsbeispiel gemäß Fig. 2 unterscheidet sich jedoch im Hinblick auf die dort mit den Rastzapfen 34 und den Rastöffnungen 36 geschaffene Verrastung. Bei dem Ausführungsbeispiel gemäß Fig. 2 ist eine solche Verrastung nämlich nicht am Stimende des Magnetgruppengehäuses 22 gebildet, sondern an dessen äußerer Mantelfläche. Es sind dazu an der Innenseite 32 des Elektronikgehäuses 26 Rastlaschen 42 ausgebildet, welche das Magnetgruppengehäuse 22 außenseitig in Längsrichtung teilweise umgreifen. Die Rastlaschen 42 greifen hinter Rastnasen 44, welche an dieser Außenseite des Magnetgruppengehäuses 22 während dessen Herstellung eingeprägt worden sind. Diese Verrastung wird ebenfalls während des Aufsetzens des Steuergeräts 12 auf das Hydraulikgerät 14 nach vorhergehendem Einbringen einer Klebeschnurr 40 an einer Nut 38 am Rand des Elektronikgehäuses 26 hergestellt. Auf diese Weise ist wiederum ein nachfolgend gegebenenfalls auch länger andauernder Aushärtevorgang an der derart hergestellten Verklebung möglich, während zugleich eine weitere Montage mit dem Hydroaggregat vollzogen wird.

## Patentansprüche

1. Verfahren zum Herstellen eines Hydroaggregats (10) einer hydraulischen Fahrzeugbremsanlage mit den Schritten:
Bereitstellen eines Steuergeräts (12) und eines Hydraulikgeräts (14),
Vorbereiten einer Verrastung (34, 36; 42, 44) zwischen dem Steuergerät (12) und dem Hydraulikgerät (14),
Vorbereiten einer Verklebung (40) zwischen dem Steuergerät (12) und dem Hydraulikgerät (14),
Zusammenfügen von Steuergerät (12) und Hydraulikgerät (14) sowie
Halten des Steuergeräts (12) am Hydraulikgerät (14) mittels der Verrastung (34, 36; 42, 44) zumindest während eines Aushärtens der Verklebung (40) zwischen dem Steuergerät (12) und dem Hydraulikgerät (14).

2. Verfahren nach Anspruch 1,
**gekennzeichnet durch** den Schritt:
Vorbereiten der Verklebung **durch** Ausbilden einer Klebeschnur (40) an zumindest dem Steuergerät (12) oder dem Hydraulikgerät (14).

3. Verfahren nach Anspruch 1 oder 2,
**gekennzeichnet durch** den Schritt:
Vorbereiten der Verrastung (34, 36; 42, 44) **durch** Ausbilden zumindest eines ersten Rastelements (34; 42) am Steuergerät (12) und **durch** Ausbilden zumindest eines zweiten Rastelements (36; 44) an einem zum Hydraulikgerät (14) gehörenden Magnetventil (18).

4. Hydroaggregat einer hydraulischen Fahrzeugbremsanlage mit einem Steuergerät (12), welches an einem Hydraulikgerät (14) ortsfest angebracht ist,
**dadurch gekennzeichnet, dass** das Steuergerät (12) an dem Hydraulikgerät (14) mittels einer Verklebung (40) und einer Verrastung (34, 36; 42, 44) gehalten ist.

5. Hydroaggregat nach Anspruch 4,
**dadurch gekennzeichnet, dass** die Verklebung mit einer Klebeschnur (40) zwischen dem Steuergerät (12) und dem Hydraulikgerät (14) gebildet ist.

6. Hydroaggregat nach Anspruch 4 oder 5,
**dadurch gekennzeichnet, dass** die Verrastung (34, 36; 42, 44) mit zumindest einem ersten Rastelement (34; 42) und zumindest einem zweiten Rastelement (36; 44) gebildet ist, von denen das zumindest eine erste Rastelement (34; 42) am Steuergerät (12) und das zumindest eine zweite Rastelement (36; 44) an einem zum Hydraulikgerät (14) gehörenden Magnetventil (18) ausgebildet sind.

7. Hydroaggregat nach Anspruch 6,
**dadurch gekennzeichnet, dass** das zweite Rastelement (36) an einem vom restlichen Hydraulikgerät (14) abgewandten Endbereich des Magnetventils (18) und bevorzugt in einem Magnetgruppengehäuse (22) ausgebildet ist.

8. Hydroaggregat nach Anspruch 6,
**dadurch gekennzeichnet, dass** das zweite Rastelement (44) an einer äußeren Mantelfläche eines zylindrischen Magnetgruppengehäuses (22) des Magnetventils (18) ausgebildet ist.
